(19) Europäisches Patentamt / European Patent Office / Office européen des brevets

(11) **EP 4 734 206 A1**

(12) **EUROPEAN PATENT APPLICATION**
published in accordance with Art. 153(4) EPC

(43) Date of publication:
**29.04.2026 Bulletin 2026/18**

(21) Application number: **24882816.2**

(22) Date of filing: **23.10.2024**

(51) International Patent Classification (IPC):
*H01M 10/052* (2010.01)   *H01M 4/38* (2006.01)
*H01M 10/0569* (2010.01)   *H01M 4/587* (2010.01)
*H01M 4/36* (2006.01)   *H01M 4/525* (2010.01)
*H01M 4/505* (2010.01)   *H01M 10/04* (2006.01)
*H01M 10/0567* (2010.01)

(52) Cooperative Patent Classification (CPC):
**H01M 4/36; H01M 4/38; H01M 4/505; H01M 4/525;
H01M 4/587; H01M 10/04; H01M 10/052;
H01M 10/0567; H01M 10/0569;** Y02E 60/10

(86) International application number:
**PCT/KR2024/016190**

(87) International publication number:
**WO 2025/089789 (01.05.2025 Gazette 2025/18)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **23.10.2023   KR 20230142496
10.07.2024   KR 20240091397**

(71) Applicant: **LG Energy Solution, Ltd.
Seoul 07335 (KR)**

(72) Inventor: **YEO, Min Ji
Daejeon 34122 (KR)**

(74) Representative: **Plasseraud IP
104 Rue de Richelieu
CS92104
75080 Paris Cedex 02 (FR)**

(54) **LITHIUM SECONDARY BATTERY**

(57)   Provided is a lithium secondary battery including a negative electrode including a negative electrode current collector and a negative electrode active material layer formed on the negative electrode current collector, a positive electrode, and an electrolyte including a lithium salt, an organic solvent, and an additive, wherein the negative electrode active material layer includes Si as a negative electrode active material, the organic solvent contains fluoroethylene carbonate, and Z below has a value of 0.1 to 0.2.

$$Z = \sqrt{X} / Y$$

The X above is a content (wt%) of Si with respect to the total weight of the negative electrode active material included in the negative electrode active material layer, and the Y above is a content (wt%) of fluoroethylene carbonate with respect to the total weight of the electrolyte, after the lithium secondary battery is activated.

EP 4 734 206 A1

**Description**

**TECHNICAL FIELD**

**Cross-reference to Related Applications**

This application claims the benefit of Korean Patent Application Nos. 10-2023-0142496, filed on October 23, 2023, and 10-2024-0091397, filed on July 10, 2024, in the Korean Intellectual Property Office, the disclosures of which are incorporated herein in its entirety by reference.

**Technical Field**

The present invention relates to a lithium secondary battery.

**BACKGROUND ART**

Recently, as the application area of lithium secondary batteries has rapidly expanded to the power supply of electronic devices such as electricity, electronics, communications, and computers, as well as the power storage supply of large-area devices such as automobiles and power storage devices, the demand for high-capacity, high-output, and high-stability secondary batteries is increasing.

Particularly, in lithium secondary batteries for automotive applications, the properties of high capacity, high power, and long lifespan are becoming important. Therefore, for the high capacity of a lithium secondary battery, a silicon-based negative electrode active material which is high in energy density but low in stability may be applied.

However, if a silicon-based negative electrode active material is applied as a negative electrode active material in a lithium secondary battery to increase the capacity, the contraction and expansion of a negative electrode is extreme during a cycle, so that there is a problem in that long-term lifespan property or battery durability is poor. A typical lithium secondary battery focuses on forming a stable SEI layer on an initial negative electrode, but a silicon-based negative electrode active material is subjected to an extreme volume change as charge and discharge are repeated, and thus, has a problem in that it is difficult to obtain sufficient long-term lifespan properties or battery durability.

**DISCLOSURE OF THE INVENTION**

**TECHNICAL PROBLEM**

The present invention is to solve the above-described problem, and is to provide a lithium secondary battery capable of stabilizing deterioration caused by the volume change of a silicon-based negative electrode active material even during a cycle. At the same time, the present invention is to provide a lithium secondary battery having excellent other overall battery properties.

**TECHNICAL SOLUTION**

The inventors of the present invention have repeated a careful review and found that it is possible to achieve the objects of present disclosure in the following aspects, and have completed the present invention.

[1] Provided is a lithium secondary battery including a negative electrode including a negative electrode current collector and a negative electrode active material layer formed on the negative electrode current collector, a positive electrode, and an electrolyte including a lithium salt, an organic solvent, and an additive, wherein the negative electrode active material layer includes Si as a negative electrode active material, the organic solvent contains fluoroethylene carbonate, and Z below has a value of 0.1 to 0.2.

$$Z = \sqrt{X} / Y$$

The X above is a content (wt%) of Si with respect to the total weight of the negative electrode active material included in the negative electrode active material layer, and the Y above is a content (wt%) of fluoroethylene carbonate with respect to the total weight of the electrolyte, after the lithium secondary battery is activated.

[2] In [1] above, the present invention may provide a lithium secondary battery, wherein the negative electrode active material included in the negative electrode active material layer is composed of a mixture of Si and graphite.

[3] In [1] or [2] above, the present invention may provide a lithium secondary battery, wherein the X above is 1 wt% to 10 wt%.

[4] In any one of [1] to [3] above, the present invention may provide a lithium secondary battery, wherein the Y above is 12 wt% to 24 wt%.

[5] In any one of [1] to [4] above, the present invention may provide a lithium secondary battery, wherein the organic solvent further includes ethylmethyl carbonate and dimethyl carbonate.

[6] In [5] above, the present invention may provide a lithium secondary battery, wherein the dimethyl carbonate is included in an amount of 20 wt% to 70 wt% based on the total weight of the electrolyte.

[7] In any one of [1] to [6] above, the present invention may provide a lithium secondary battery, wherein the additive comprises vinylene carbonate, ethylene sulfate, and propane sultone.

[8] In [7] above, the present invention may provide a lithium secondary battery, wherein the additive is included in an amount of 1 wt% to 10 wt% based on the total weight of the electrolyte.

[9] In any one of [1] to [8] above, the present invention may provide a lithium secondary battery, wherein the positive electrode comprises a positive electrode current collector and a positive electrode active material layer formed on the positive electrode current collector, wherein a positive electrode active material included in the positive electrode active material layer is a lithium nickel-based oxide represented by [Formula 1] below.

$$[\text{Formula 1}] \qquad Li_aNi_bCo_cM^1_dM^2_eO_2$$

In Formula 1 above, $M^1$ may be Mn, Al, or a combination thereof, $M^2$ may be one or more selected from the group consisting of Zr, W, Y, Ba, Ca, Ti, Mg, Ta, and Nb, and $0.8 \leq a \leq 1.2$, $0.8 \leq b < 1$, $0 < c < 0.2$, $0 < d < 0.2$, and $0 \leq e \leq 0.1$.

[10] In any one of [1] to [9] above, the present invention may provide a lithium secondary battery, wherein the lithium secondary battery has a cylindrical shape.

## ADVANTAGEOUS EFFECTS

In the present invention, the value of Z is controlled such that the amount of fluoroethylene carbonate after activation satisfies a specific range according to the amount of Si, that is, the amount of volume change, which is a negative electrode active material included in a lithium secondary battery and causes the collapse of an SEI film through an extreme volume change. As the amount of Si increases, volume expansion/contraction intensifies during a cycle, and cracks are generated in an initially formed SEI film, which accelerates deterioration, but fluoroethylene carbonate remaining after activation causes a ring-opening reaction and a defluorination reaction, thereby forming a new negative electrode film in each cycle, so that there is an effect of securing interfacial stability between Si and an electrolyte and suppressing further decomposition of the electrolyte.

In addition, by reducing the amount of fluoroethylene carbonate present in excess without forming a new negative electrode film by the control of the value of Z to allow the amount of fluoroethylene carbonate to satisfy a specific range according to the amount of Si, it is possible to minimize the adverse effect to the stability of the battery due to the generation of by-product gases such as carbon dioxide ($CO_2$) and ethene ($C_2H_4$).

## MDOE FOR CARRYING OUT THE INVENTION

Hereinafter, the present invention will be described in more detail.

A negative electrode, a positive electrode, an electrolyte, and/or a lithium secondary battery according to the present invention include at least one among configurations disclosed below, and may include any combination of technically possible configurations among the following configurations.

It will be understood that terms or words used in the present specification and claims shall not be construed as being limited to having meanings defined in commonly used dictionaries, but should be interpreted as having meanings and concepts consistent with the technical idea of the present invention based on the principle that an inventor may appropriately define concepts of the terms to best explain the invention.

The lithium secondary battery of the present invention includes a negative electrode including a negative electrode current collector and a negative electrode active material layer formed on the negative electrode current collector, a positive electrode, and an electrolyte including a lithium salt, an organic solvent, and an additive.

Particularly, the negative electrode active material layer includes Si as a negative electrode active material. The Si refers to pure Si particles, not a silicon oxide or a silicon carbon composite. In addition, the organic solvent included in the electrolyte of the present invention contains fluoroethylene carbonate.

The lithium secondary battery of the present invention has a value of Z below of 0.1 to 0.2. The Z below may preferably be 0.10 to 0.15, more preferably 0.11 to 0.13.

$$Z = \sqrt{X} / Y$$

The X above is a content (wt%) of Si with respect to the total weight of the negative electrode active material included in the negative electrode active material layer. The X may be 1 wt% to 10 wt%, preferably 1 wt% to 8 wt%, and more preferably 4 wt% to 6 wt%.

As the negative electrode active material other than Si, a compound capable of reversible intercalation and de-intercalation of lithium may be used. Specific examples thereof may include a carbonaceous material such as artificial graphite, natural graphite, graphitized carbon fiber, and amorphous carbon, a lithium metal thin film, a metal material alloyable with lithium, such as Sn and Al, and the like, and any one thereof or a mixture of two or more thereof may be used.

A negative electrode containing Si may implement a high capacity, but has an aspect in that the structural stability is reduced due to an extreme contraction and expansion during a charging and discharging process, so that it is preferable to mix Si with a carbon-based negative electrode active material and use the mixture. Most preferably, it is preferable that a mixture of Si and graphite is included as a negative electrode active material.

In the negative electrode active material included in the negative electrode active material layer of the present invention, Si and graphite may be included at a weight ratio of 1 : 99 to 20 : 80, a weight ratio of 2 : 98 to 10 : 90, or a weight ratio of 2.5 : 97.5 to 8.0 : 92.0.

The Y above is a content (wt%) of fluoroethylene carbonate with respect to the total weight of the electrolyte, after the lithium secondary battery is activated. The lithium secondary battery is assembled in a form in which an electrode assembly is embedded together with an electrolyte in a battery case, and then manufactured through an activation process. The activation process includes a process of charging, aging, and discharging the assembled battery, and stabilizes the battery structure and sets the battery to a usable state.

The Y above may be 12 wt% to 24 wt%, preferably 12 wt% to 16 wt%, and more preferably 13 wt% to 15 wt%.

In addition, the fluoroethylene carbonate may be included in an amount of 0.5 wt% to 40 wt% based on the total weight of the electrolyte before activation.

The negative electrode of the present invention may have a structure in which a negative electrode active material layer is formed on one surface or both surfaces of a negative electrode current collector in a long sheet shape, and the negative electrode active material layer may include a negative electrode active material containing Si, a conductive material, and a binder.

Specifically, the negative electrode may be manufactured by a method of applying a negative electrode slurry, which is prepared by dispersing a negative active material, a conductive material, and a binder in a solvent such as dimethyl sulfoxide (DMSO), isopropyl alcohol, N-methylpyrrolidone (NMP), acetone, or water, on one surface or both surfaces of a long sheet-shaped negative electrode current collector, removing the solvent of the negative electrode slurry through a drying process, followed by roll-pressing.

As the negative electrode current collector, negative electrode current collectors commonly used in the art may be used, and for example, copper, stainless steel, aluminum, nickel, titanium, fired carbon, or copper or stainless steel that is surface-treated with one of carbon, nickel, titanium, silver, and the like, an aluminum-cadmium alloy, or the like may be used. The negative electrode current collector may typically have a thickness of 3 μm to 500 μm, and as in the case of the positive electrode current collector, microscopic irregularities may be formed on the surface of the current collector to improve the adhesion of the negative electrode active material. For example, the negative electrode current collector may be used in various forms such as a film, a sheet, a foil, a net, a porous body, a foam, a non-woven body, and the like.

The conductive material is used to impart conductivity to the negative electrode, and any conductive material may be used without particular limitation as long as it has electron conductivity without causing a chemical change in a battery to be constituted. Specific examples thereof may include graphite such as natural graphite or artificial graphite; a carbon-based material such as carbon black, acetylene black, Ketjen black, channel black, furnace black, lamp black, thermal black, carbon fiber, and a carbon nanotube; metal powder or metal fiber of such as copper, nickel, aluminum, and silver; a conductive whisker such as a zinc oxide whisker and a potassium titanate whisker; a conductive metal oxide such as a titanium oxide; or a conductive polymer such as a polyphenylene derivative, and any one thereof or a mixture of two or more thereof may be used.

The conductive material may be typically included in an amount of 0.01 wt% to 0.2 wt%, preferably 0.01 wt% to 0.15 wt%, and more preferably 0.05 wt% to 0.12 wt% based on the total weight of a negative electrode active material layer.

The binder serves to improve the bonding between negative electrode active material particles and the adhesion between the negative electrode active material and the negative electrode current collector. Specific examples thereof may include polyvinylidene fluoride (PVDF), a polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer (EPDM), a sulfonated EPDM, styrene-- butadiene rubber (SBR), fluorine rubber, or various copolymers thereof, and any one thereof or a mixture of two or more thereof may be used.

The binder may be included in an amount of 1 wt% to 30 wt%, preferably 1 wt% to 20 wt%, and more preferably 1 wt% to 5 wt% based on the total weight of the negative electrode active material layer.

The electrolyte included in the lithium secondary battery of the present invention includes a lithium salt, an organic solvent, and an additive.

As the organic solvent, any organic solvent may be used without particular limitation as long as it can serve as a medium through which ions involved in an electrochemical reaction of a battery may move. Specifically, as the organic solvent, an ester-based solvent such as methyl acetate, ethyl acetate, $\gamma$-butyrolactone, and $\varepsilon$-caprolactone; an ether-based solvent such as dibutyl ether or tetrahydrofuran; a ketone-based solvent such as cyclohexanone; an aromatic hydrocarbon-based solvent such as benzene and fluorobenzene; a carbonate-based solvent such as dimethyl carbonate (DMC), diethyl carbonate (DEC), ethylmethyl carbonate (EMC), ethylene carbonate (EC), and propylene carbonate (PC); an alcohol-based solvent such as ethyl alcohol and isopropyl alcohol; nitriles such as R-CN (wherein R is a linear, branched, or cyclic C2 to C20 hydrocarbon group and may include a double-bond aromatic ring or ether bond); amides such as dimethylformamide; dioxolanes such as 1,3-dioxolane; or sulfolanes may be used.

Among these, in order to control the value of Z to be in a specific range after the activation, it is preferable that the organic solvent is a mixture of fluoroethylene carbonate, ethylmethyl carbonate and dimethyl carbonate.

Illustratively, as a factor for controlling the content of remaining FEC, the dimethyl carbonate may be included in an amount of 20 wt% to 70 wt% based on the total weight of the electrolyte. This is thought to be because dimethyl carbonate is oxidized before fluoroethylene carbonate, and thus, may increase the amount of fluoroethylene carbonate remaining in the electrolyte. For example, the dimethyl carbonate may be included in an amount of 50 wt% to 70 wt% based on the total electrolyte after the activation.

Any compound may be used as the lithium salt without particular limitation as long as it is a compound capable of providing lithium ions used in a lithium secondary battery. Specifically, anions of the lithium salt may be at least one selected from the group consisting of $F^-$, $Cl^-$, $Br^-$, $I^-$, $NO_3^-$, $N(CN)_2^-$, $BF_4^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$, and as the lithium salt, $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$. $LiCl$, $LiI$, $LiB(C_2O_4)_2$, or the like may be used. The lithium salt may be used in a concentration range of 0.1 M to 2.0 M. If the concentration of the lithium salt is included in the above-described range, the electrolyte has suitable conductivity and viscosity, and thus, may exhibit excellent electrolyte performance, and lithium ions may effectively move.

In addition to the above-described electrolyte components, the electrolyte may further include one or more types of film-forming additives such as vinylene carbonate, ethylene sulfate, and propane sultone, for the purposes of improving the lifespan properties of a battery, suppressing a decrease in battery capacity, improving the discharge capacity of the battery, and the like.

In the electrolyte of the present invention, the additive may be included in an amount of 1 wt% to 10 wt%, preferably 1 wt% to 5 wt%, and most preferably 1 wt% to 3 wt% based on the total weight of the electrolyte. The type and content of the additive may be selected in order to control the amount of fluoroethylene carbonate remaining after the activation to satisfy a specific range in relation to the content of Si.

The positive electrode of the present invention may have a structure in which a positive electrode active material layer is formed on one surface or both surfaces of a positive electrode current collector in a long sheet shape, and the positive electrode active material layer may include a positive electrode active material, a conductive material, and a binder.

Specifically, the positive electrode may be manufactured by a method of applying a positive electrode slurry, which is prepared by dispersing a positive active material, a conductive material, and a binder in a solvent such as dimethyl sulfoxide (DMSO), isopropyl alcohol, N-methylpyrrolidone (NMP), acetone, or water, on one surface or both surfaces of a long sheet-shaped positive electrode current collector, removing the solvent of the positive electrode slurry through positive electrode drying process, followed by roll-pressing.

As the positive electrode current collector, various positive electrode current collectors used in the art may be used. For example, as the positive electrode current collector, stainless steel, aluminum, nickel, titanium, fired carbon, or aluminum or stainless steel that is surface-treated with one of carbon, nickel, titanium, silver, and the like may be used. The positive electrode current collector may typically have a thickness of 3 $\mu$m to 500 $\mu$m, and microscopic irregularities may be formed on the surface of the positive electrode current collector to improve the adhesion of the positive electrode active material. The positive electrode current collector may be used in various forms such as a film, a sheet, a foil, a net, a porous body, a foam, and a non-woven body. Most preferably, an aluminum thin film may be used in terms of elongation control, and the like.

Meanwhile, as the positive electrode active material, positive electrode active materials commonly used in the art may be used.

The positive electrode active material is a compound capable of reversible intercalation and de-intercalation of lithium, and specifically, may include a lithium metal oxide including one or more metals, such as cobalt, manganese, nickel, and aluminum, and lithium. More specifically, the lithium metal oxide may be a lithium-manganese-based oxide (e.g., $LiMnO_2$, $LiMn_2O_4$, etc.), a lithium-cobalt-based oxide (e.g., $LiCoO_2$, etc.), a lithium-nickel-based oxide (e.g., $LiNiO_2$, etc.), a lithium-nickel-manganese-based oxide (e.g., $LiNi_{1-Y}Mn_YO_2$ (wherein $0<Y<1$), $LiMn_{2-Z}Ni_ZO_4$ (wherein $0<Z<2$), etc.), a lithium-nickel-cobalt-based oxide (e.g., $LiNi_{1-Y1}Co_{Y1}O_2$ (wherein $0<Y1<1$), etc.), a lithium-manganese-cobalt-based oxide (e.g., $LiCo_{1-Y2}Mn_{Y2}O_2$ (wherein $0<Y2<1$), $LiMn_{2-Z1}Co_{Z1}O_4$ (wherein $0<Z1<2$), etc.), a lithium-nickel-manganese-cobalt-based oxide (e.g., $Li(Ni_pCo_qMn_r)O_2$ (wherein $0<p<1$, $0<q<1$, $0<r<1$, and $p+q+r=1$) or $Li(Ni_{p1}Co_{q1}Mn_{r1})O_4$ (wherein $0<p1<2$, $0<q1<2$, $0<r1<2$, and $p1+q1+r1=2$), etc.), or a lithium-nickel-cobalt-transition metal (M) oxide (e.g., $Li(Ni_{p2}Co_{q2}Mn_{r2}M_{s2})O_2$ (wherein M is selected from the group consisting of Al, Fe, V, Cr, Ti, Ta, Mg, and Mo, and p2, q2, r2, and s2 are each an atomic fraction of stand-alone elements, wherein $0<p2<1$, $0<q2<1$, $0<r2<1$, $0<s2<1$, and $p2+q2+r2+s2=1$), etc.) and the like, and any one thereof or a compound of two or more thereof may be included.

Among these, due to the fact that the capacity properties and stability of a battery may be increased, the lithium metal oxide may be $LiCoO_2$, $LiMnO_2$, $LiNiO_2$, a lithium nickel-manganese-cobalt oxide (e.g., $Li(Ni_{1/3}Mn_{1/3}Co_{1/3})O_2$, $Li(Ni_{0.6}Mn_{0.2}Co_{0.2})O_2$, $Li(Ni_{0.5}Mn_{0.3}Co_{0.2})O_2$, $Li(Ni_{0.7}Mn_{0.15}Co_{0.15})O_2$, $Li(Ni_{0.8}Mn_{0.1}Co_{0.1})O_2$, etc.), a lithium nickel-cobalt-aluminum oxide (e.g., $Li(Ni_{0.8}Co_{0.15}Al_{0.05})O_2$, etc.), a lithium nickel-manganese-cobalt-aluminum oxide (e.g., $Li(Ni_{0.86}Co_{0.05}Mn_{0.07}Al_{0.02})O_2$), or the like, and any one thereof or a mixture of two or more thereof may be used.

More specifically, the positive electrode active material may include a lithium nickel-based oxide represented by [Formula 1] below.

[Formula 1] $\qquad Li_aNi_bCo_cM^1_dM^2_eO_2$

In Formula 1 above, $M^1$ may be Mn, Al, or a combination thereof, and preferably, Mn, or Mn and Al.

$M^2$ is one or more selected from the group consisting of Zr, W, Y, Ba, Ca, Ti, Mg, Ta, and Nb, and preferably, may be one or more selected from the group consisting of Zr, Y, Mg, and Ti, and more preferably, may be Zr, Y, or a combination thereof. An $M^2$ element is not necessarily included, but when included in an appropriate amount, the $M^2$ element may serve to promote particle growth during firing or improve crystal structure stability.

The a represents the molar ratio of lithium in the lithium nickel-based oxide, wherein the a may satisfy $0.8 \leq a \leq 1.2$, $0.85 \leq a \leq 1.15$, or $0.9 \leq a \leq 1.2$. When the molar ratio of the lithium satisfies the above-described range, the crystal structure of the lithium nickel-based oxide may be stably formed.

The b represents the molar ratio of nickel in all metals except lithium in the lithium nickel-based oxide, and the b may satisfy $0.8 \leq b < 1$, $0.85 \leq b < 1$, $0.86 \leq b < 1$, or $0.88 \leq b < 1$. When the molar ratio of the nickel satisfies the above-described range, high energy density may be achieved to implement high capacity.

The c represents the molar ratio of cobalt in all metals except lithium in the lithium nickel-based oxide, and the c may satisfy $0 < c < 0.2$, $0 < c < 0.15$, $0 < c < 0.14$, or $0.01 \leq c \leq 0.12$. When the molar ratio of the cobalt satisfies the above-described range, good resistance properties and output properties may be implemented.

The d represents the molar ratio of an $M^1$ element in all metals except lithium in the lithium nickel-based oxide, and the d may satisfy $0 < d < 0.2$, $0 < d < 0.15$, $0 < d < 0.14$, or $0.01 \leq d \leq 0.12$. When the molar ratio of the $M^1$ element satisfies the above-described range, the structural stability of a positive electrode active material is exhibited to be excellent.

The e represents the molar ratio of the $M^2$ element in all metals except lithium in the lithium nickel-based oxide, wherein the e may satisfy $0 \leq e \leq 0.1$, or $0 \leq e \leq 0.05$.

Meanwhile, the positive electrode active material according to the present invention may further include, if necessary, a coating layer on the surface of a lithium nickel-based oxide particle, the coating layer including one or more coating elements selected from the group consisting of Al, Ti, W, B, F, P, Mg, Ni, Co, Fe, Cr, V, Cu, Ca, Zn, Zr, Nb. Mo, Sr, Sb, Bi, Si, and S. Preferably, the coating element may be Al, B, Co, or a combination thereof, and most preferably, the coating element may be B.

If there is a coating layer present on the surface of the lithium nickel-based oxide particle, the contact between an electrolyte and a lithium composite transition metal oxide is suppressed by the coating layer, and as a result, there may be an effect of reducing transition metal elution or gas generation due to a side reaction with the electrolyte.

Next, the conductive material is used to impart conductivity to an electrode, and any conductive material may be used without particular limitation as long as it has electron conductivity without causing a chemical change in a battery to be constituted. Specific examples thereof may include graphite such as natural graphite or artificial graphite; a carbon-based material such as carbon black, acetylene black, Ketjen black, channel black, furnace black, lamp black, thermal black, carbon fiber, and a carbon nanotube; metal powder or metal fiber of such as copper, nickel, aluminum, and silver; a conductive whisker such as a zinc oxide whisker and a potassium titanate whisker; a conductive metal oxide such as a titanium oxide; or a conductive polymer such as a polyphenylene derivative, and any one thereof or a mixture of two or more thereof may be used.

The conductive material may be included in an amount of 0.1 wt% to 10 wt%, preferably 0.1 to 5 wt%, and more preferably 1 wt% to 3 wt% based on the total weight of the positive electrode active material layer.

The binder serves to improve the bonding between positive electrode active material particles and the adhesion between a positive electrode active material and a positive electrode current collector. specific examples thereof may include polyvinylidene fluoride (PVDF), a polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer (EPDM), a sulfonated EPDM, styrene-- butadiene rubber (SBR), fluorine rubber, or various copolymers thereof, and any one thereof or a mixture of two or more thereof may be used.

The binder may be included in an amount of 1 wt% to 30 wt%, preferably 1 wt% to 15 wt%, and more preferably 1 wt% to 4 wt% based on the total weight of the positive electrode active material layer.

The external shape of the lithium secondary battery of the present invention may have a cylindrical shape using a can, a square shape, or the like. If the lithium secondary battery according to the present invention has a cylindrical shape, the cylindrical lithium secondary battery may include a jelly-roll type electrode assembly having a structure in which a positive electrode plate, a negative electrode plate, and a separator interposed between the positive electrode plate and the negative electrode plate are wound in one direction, a battery can in which the electrode assembly is accommodated, and a sealing body for sealing an open end of the battery can.

In addition to the positive electrode and the negative electrode described above, the separator interposed between the positive electrode and the negative electrode is to separate a negative electrode and a positive electrode and to provide a movement path for lithium ions, and any separator may be used without particular limitation as long as it is a separator typically used in a lithium secondary battery. Specifically, as the separator, a porous polymer film, for example, a porous polymer film manufactured using a polyolefin-based polymer such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a typical porous non-woven fabric, for example, a non-woven fabric made of glass fiber having a high melting point, polyethylene terephthalate fiber, or the like may be used. Also, a coated separator including a ceramic component or a polymer material may be used to secure heat resistance or mechanical strength.

The lithium secondary battery according to the present invention may be used in a battery cell used as a power source for a small-sized device, and also, may be preferably used as a unit cell in a medium-and-large-sized battery module including a plurality of battery cells.

Examples of the medium- and large-sized device include electric vehicles, hybrid electric vehicles, plug-in hybrid electric vehicles, and electric power storage systems, but are not limited thereto.

Hereinafter, the present invention will be described in more detail with reference to specific examples. However, the following examples are for illustrative purposes only to facilitate the understanding of the present invention, and do not limit the scope of the present invention. It will be apparent to those skilled in the art that various changes and modifications can be made without departing from the scope and spirit of the invention, and it is obvious that such variations and modifications are within the scope of the appended claims.

## Examples

### Example 1

1.3 M of $LiPF_6$, and 2.0 wt% of vinylene carbonate, 1.3 wt% of ethylene sulfate, and 2.0 wt% of propane sultone as additives were added to an organic solvent (ethylmethyl carbonate (EMC) : dimethyl carbonate (DMC) : fluoroethylene carbonate (FEC) = 5 : 75 : 20 weight ratio) to prepare a non-aqueous electrolyte.

$Li[Ni_{0.9}Co_{0.06}Mn_{0.03}Al_{0.01}]O_2$, carbon nanotubes, a PVDF binder were mixed at a weight ratio of 95 : 2 : 3 in N-methylpyrrolidone to prepare a positive electrode slurry. The positive electrode slurry was applied on one surface of an aluminum current collector sheet having a thickness of 15.0 $\mu$m, dried at 120 °C, and then roll-pressed to manufacture a positive electrode.

A negative electrode active material (graphite : Si = 94.5 : 5.5 weight ratio mixture) : a conductive material (super C) : styrene-butadiene rubber (SBR) : carboxymethyl cellulose (CMC) were mixed at a weight ratio of 98 : 0.1 : 1.5 : 0.4 in water to prepare a negative electrode slurry. The negative electrode slurry was applied on one surface of a copper current collector sheet, dried at 150 °C, and then roll-pressed to manufacture a negative electrode.

A separator was interposed between the positive electrode and the negative electrode manufactured as described above to stack the separator, the positive electrode, and the negative electrode in the order of separator/positive electrode/separator/negative electrode, and then wound to manufacture a jelly-roll type electrode assembly.

The electrode assembly manufactured as described above was inserted into a cylindrical battery can having a diameter of 21 mm and a height of 70 mm, and the above-described electrolyte was injected into the can to manufacture a cylindrical lithium secondary battery. After the manufactured cylindrical lithium secondary battery was activated by being charged to 4.2 V at 0.5 C, the content of fluoroethylene carbonate with respect to the total weight of the electrolyte was 17.0 wt%.

**Example 2**

1.3 M of $LiPF_6$, and 2.0 wt% of vinylene carbonate, 1.3 wt% of ethylene sulfate, and 2.0 wt% of propane sultone as additives were added to an organic solvent (ethylmethyl carbonate (EMC) : dimethyl carbonate (DMC) : fluoroethylene carbonate (FEC) = 5 : 75 : 20 weight ratio) to prepare a non-aqueous electrolyte.

$Li[Ni_{0.9}Co_{0.06}Mn_{0.03}Al_{0.01}]O_2$, carbon nanotubes, a PVDF binder were mixed at a weight ratio of 95 : 2 : 3 in N-methylpyrrolidone to prepare a positive electrode slurry. The positive electrode slurry was applied on one surface of an aluminum current collector sheet having a thickness of 15.0 $\mu$m, dried at 120 °C, and then roll-pressed to manufacture a positive electrode.

A negative electrode active material (graphite : Si = 97.0 : 3.0 weight ratio mixture) : a conductive material (super C) : styrene-butadiene rubber (SBR) : carboxymethyl cellulose (CMC) were mixed at a weight ratio of 98 : 0.1 : 1.5 : 0.4 in water to prepare a negative electrode slurry. The negative electrode slurry was applied on one surface of a copper current collector sheet, dried at 150 °C, and then roll-pressed to manufacture a negative electrode.

A separator was interposed between the positive electrode and the negative electrode manufactured as described above to stack the separator, the positive electrode, and the negative electrode in the order of separator/positive electrode/separator/negative electrode, and then wound to manufacture a jelly-roll type electrode assembly.

The electrode assembly manufactured as described above was inserted into a cylindrical battery can having a diameter of 21 mm and a height of 70 mm, and the above-described electrolyte was injected into the can to manufacture a cylindrical lithium secondary battery. After the manufactured cylindrical lithium secondary battery was activated by being charged to 4.2 V at 0.5 C, the content of fluoroethylene carbonate with respect to the total weight of the electrolyte was 15.8 wt%.

**Example 3**

1.3 M of $LiPF_6$, and 2.0 wt% of vinylene carbonate, 1.3 wt% of ethylene sulfate, and 2.0 wt% of propane sultone as additives were added to an organic solvent (ethylmethyl carbonate (EMC) : dimethyl carbonate (DMC) : fluoroethylene carbonate (FEC) = 5 : 75 : 20 weight ratio) to prepare a non-aqueous electrolyte.

$Li[Ni_{0.9}Co_{0.06}Mn_{0.03}Al_{0.01}]O_2$, carbon nanotubes, a PVDF binder were mixed at a weight ratio of 95 : 2 : 3 in N-methylpyrrolidone to prepare a positive electrode slurry. The positive electrode slurry was applied on one surface of an aluminum current collector sheet having a thickness of 15.0 $\mu$m, dried at 120 °C, and then roll-pressed to manufacture a positive electrode.

A negative electrode active material (graphite : Si = 97.0 : 3.0 weight ratio mixture) : a conductive material (super C) : styrene-butadiene rubber (SBR) : carboxymethyl cellulose (CMC) were mixed at a weight ratio of 98 : 0.1 : 1.5 : 0.4 in water to prepare a negative electrode slurry. The negative electrode slurry was applied on one surface of a copper current collector sheet, dried at 150 °C, and then roll-pressed to manufacture a negative electrode.

A separator was interposed between the positive electrode and the negative electrode manufactured as described above to stack the separator, the positive electrode, and the negative electrode in the order of separator/positive electrode/separator/negative electrode, and then wound to manufacture a jelly-roll type electrode assembly.

The electrode assembly manufactured as described above was inserted into a cylindrical battery can having a diameter of 21 mm and a height of 70 mm, and the above-described electrolyte was injected into the can to manufacture a cylindrical lithium secondary battery. After the manufactured cylindrical lithium secondary battery was activated by being charged to 4.2 V at 0.1 C, the content of fluoroethylene carbonate with respect to the total weight of the electrolyte was 14.3 wt%.

**Comparative Example 1**

1.3 M of $LiPF_6$, and 1 wt% of fluoroethylene carbonate, 2.0 wt% of vinylene carbonate, 1.3 wt% of ethylene sulfate, and 2.0 wt% of propane sultone as additives were added to an organic solvent (ethylmethyl carbonate (EMC) : dimethyl carbonate (DMC) : ethylene carbonate (EC) = 5 : 75 : 20 weight ratio) to prepare a non-aqueous electrolyte.

$Li[Ni_{0.9}Co_{0.06}Mn_{0.03}Al_{0.01}]O_2$, carbon nanotubes, a PVDF binder were mixed at a weight ratio of 95 : 2 : 3 in N-methylpyrrolidone to prepare a positive electrode slurry. The positive electrode slurry was applied on one surface of an aluminum current collector sheet having a thickness of 15.0 $\mu$m, dried at 120 °C, and then roll-pressed to manufacture a positive electrode.

A negative electrode active material (graphite : Si = 94.5 : 5.5 weight ratio mixture) : a conductive material (super C) : styrene-butadiene rubber (SBR) : carboxymethyl cellulose (CMC) were mixed at a weight ratio of 98 : 0.1 : 1.5 : 0.4 in water to prepare a negative electrode slurry. The negative electrode slurry was applied on one surface of a copper current collector sheet, dried at 150 °C, and then roll-pressed to manufacture a negative electrode.

A separator was interposed between the positive electrode and the negative electrode manufactured as described above to stack the separator, the positive electrode, and the negative electrode in the order of separator/positive electrode/separator/negative electrode, and then wound to manufacture a jelly-roll type electrode assembly.

The electrode assembly manufactured as described above was inserted into a cylindrical battery can having a diameter of 21 mm and a height of 70 mm, and the above-described electrolyte was injected into the can to manufacture a cylindrical lithium secondary battery. After the manufactured cylindrical lithium secondary battery was activated by being charged to 4.2 V at 0.5 C, the content of fluoroethylene carbonate with respect to the total weight of the electrolyte was 0 wt%.

**Comparative Example 2**

1.3 M of $LiPF_6$, and 2.0 wt% of vinylene carbonate, 1.3 wt% of ethylene sulfate, and 2.0 wt% of propane sultone as additives were added to an organic solvent (ethylmethyl carbonate (EMC) : dimethyl carbonate (DMC) : ethylene carbonate (EC) : fluoroethylene carbonate (FEC) = 5 : 65 : 20 : 10 weight ratio) to prepare a non-aqueous electrolyte.

$Li[Ni_{0.9}Co_{0.06}Mn_{0.03}Al_{0.01}]O_2$, carbon nanotubes, a PVDF binder were mixed at a weight ratio of 95 : 2 : 3 in N-methylpyrrolidone to prepare a positive electrode slurry. The positive electrode slurry was applied on one surface of an aluminum current collector sheet having a thickness of 15.0 $\mu$m, dried at 120 °C, and then roll-pressed to manufacture a positive electrode.

A negative electrode active material (graphite : Si = 94.5 : 5.5 weight ratio mixture) : a conductive material (super C) : styrene-butadiene rubber (SBR) : carboxymethyl cellulose (CMC) were mixed at a weight ratio of 98 : 0.1 : 1.5 : 0.4 in water to prepare a negative electrode slurry. The negative electrode slurry was applied on one surface of a copper current collector sheet, dried at 150 °C, and then roll-pressed to manufacture a negative electrode.

A separator was interposed between the positive electrode and the negative electrode manufactured as described above to stack the separator, the positive electrode, and the negative electrode in the order of separator/positive electrode/separator/negative electrode, and then wound to manufacture a jelly-roll type electrode assembly.

The electrode assembly manufactured as described above was inserted into a cylindrical battery can having a diameter of 21 mm and a height of 70 mm, and the above-described electrolyte was injected into the can to manufacture a cylindrical lithium secondary battery. After the manufactured cylindrical lithium secondary battery was activated by being charged to 4.2 V at 0.5 C, the content of fluoroethylene carbonate with respect to the total weight of the electrolyte was 6.5 wt%.

**Comparative Example 3**

1.3 M of $LiPF_6$ was dissolved in 80 wt% of dimethyl carbonate (DMC) and 20 wt% of fluoroethylene carbonate (FEC) to prepare a non-aqueous electrolyte.

$Li[Ni_{0.9}Co_{0.06}Mn_{0.03}Al_{0.01}]O_2$, carbon nanotubes, a PVDF binder were mixed at a weight ratio of 95 : 2 : 3 in N-methylpyrrolidone to prepare a positive electrode slurry. The positive electrode slurry was applied on one surface of an aluminum current collector sheet having a thickness of 15.0 $\mu$m, dried at 120 °C, and then roll-pressed to manufacture a positive electrode.

A negative electrode active material (graphite : Si = 94.5 : 5.5 weight ratio mixture) : a conductive material (super C) : styrene-butadiene rubber (SBR) : carboxymethyl cellulose (CMC) were mixed at a weight ratio of 98 : 0.1 : 1.5 : 0.4 in water to prepare a negative electrode slurry. The negative electrode slurry was applied on one surface of a copper current collector sheet, dried at 150 °C, and then roll-pressed to manufacture a negative electrode.

A separator was interposed between the positive electrode and the negative electrode manufactured as described above to stack the separator, the positive electrode, and the negative electrode in the order of separator/positive electrode/separator/negative electrode, and then wound to manufacture a jelly-roll type electrode assembly.

The electrode assembly manufactured as described above was inserted into a cylindrical battery can having a diameter of 21 mm and a height of 70 mm, and the above-described electrolyte was injected into the can to manufacture a cylindrical lithium secondary battery. After the manufactured cylindrical lithium secondary battery was activated by being charged to 4.2 V at 0.5 C, the content of fluoroethylene carbonate with respect to the total weight of the electrolyte was 10.1 wt%.

**Comparative Example 4**

1.3 M of $LiPF_6$, and 2.5 wt% of vinylene carbonate as an additive were added to an organic solvent (dimethyl carbonate (DMC) : fluoroethylene carbonate (FEC) = 80 : 20 weight ratio) to prepare a non-aqueous electrolyte.

$Li[Ni_{0.9}Co_{0.06}Mn_{0.03}Al_{0.01}]O_2$, carbon nanotubes, a PVDF binder were mixed at a weight ratio of 95 : 2 : 3 in N-methylpyrrolidone to prepare a positive electrode slurry. The positive electrode slurry was applied on one surface of an aluminum current collector sheet having a thickness of 15.0 $\mu$m, dried at 120 °C, and then roll-pressed to manufacture a positive electrode.

A negative electrode active material (graphite : Si = 94.5 : 5.5 weight ratio mixture) : a conductive material (super C) : styrene-butadiene rubber (SBR) : carboxymethyl cellulose (CMC) were mixed at a weight ratio of 98 : 0.1 : 1.5 : 0.4 in water to prepare a negative electrode slurry. The negative electrode slurry was applied on one surface of a copper current collector sheet, dried at 150 °C, and then roll-pressed to manufacture a negative electrode.

A separator was interposed between the positive electrode and the negative electrode manufactured as described above to stack the separator, the positive electrode, and the negative electrode in the order of separator/positive electrode/separator/negative electrode, and then wound to manufacture a jelly-roll type electrode assembly.

The electrode assembly manufactured as described above was inserted into a cylindrical battery can having a diameter of 21 mm and a height of 70 mm, and the above-described electrolyte was injected into the can to manufacture a cylindrical lithium secondary battery. After the manufactured cylindrical lithium secondary battery was activated by being charged to 4.2 V at 0.5 C, the content of fluoroethylene carbonate with respect to the total weight of the electrolyte was 10.5 wt%.

**Comparative Example 5**

1.3 M of $LiPF_6$, and 2.0 wt% of vinylene carbonate, 1.3 wt% of ethylene sulfate, and 2.0 wt% of propane sultone as additives were added to an organic solvent (diethyl carbonate (DEC) : dimethyl carbonate (DMC) : fluoroethylene carbonate (FEC) = 10 : 60 : 30 weight ratio) to prepare a non-aqueous electrolyte.

$Li[Ni_{0.9}Co_{0.06}Mn_{0.03}Al_{0.01}]O_2$, carbon nanotubes, a PVDF binder were mixed at a weight ratio of 95 : 2 : 3 in N-methylpyrrolidone to prepare a positive electrode slurry. The positive electrode slurry was applied on one surface of an aluminum current collector sheet having a thickness of 15.0 $\mu$m, dried at 120 °C, and then roll-pressed to manufacture a positive electrode.

A negative electrode active material (graphite : Si = 94.5 : 5.5 weight ratio mixture) : a conductive material (super C) : styrene-butadiene rubber (SBR) : carboxymethyl cellulose (CMC) were mixed at a weight ratio of 98 : 0.1 : 1.5 : 0.4 in water to prepare a negative electrode slurry. The negative electrode slurry was applied on one surface of a copper current collector sheet, dried at 150 °C, and then roll-pressed to manufacture a negative electrode.

A separator was interposed between the positive electrode and the negative electrode manufactured as described above to stack the separator, the positive electrode, and the negative electrode in the order of separator/positive electrode/separator/negative electrode, and then wound to manufacture a jelly-roll type electrode assembly.

The electrode assembly manufactured as described above was inserted into a cylindrical battery can having a diameter of 21 mm and a height of 70 mm, and the above-described electrolyte was injected into the can to manufacture a cylindrical lithium secondary battery. After the manufactured cylindrical lithium secondary battery was activated by being charged to 4.2 V at 0.5 C, the content of fluoroethylene carbonate with respect to the total weight of the electrolyte was 27.4 wt%.

**Comparative Example 6**

1.3 M of $LiPF_6$, and 2.0 wt% of vinylene carbonate, 1.3 wt% of ethylene sulfate, and 2.0 wt% of propane sultone as additives were added to an organic solvent (ethylene carbonate (EC) : dimethyl carbonate (DMC) : fluoroethylene carbonate (FEC) = 20 : 75 : 5 weight ratio) to prepare a non-aqueous electrolyte.

$Li[Ni_{0.9}Co_{0.06}Mn_{0.03}Al_{0.01}]O_2$, carbon nanotubes, a PVDF binder were mixed at a weight ratio of 95 : 2 : 3 in N-methylpyrrolidone to prepare a positive electrode slurry. The positive electrode slurry was applied on one surface of an aluminum current collector sheet having a thickness of 15.0 $\mu$m, dried at 120 °C, and then roll-pressed to manufacture a positive electrode.

A negative electrode active material (graphite : Si = 98.0 : 2.0 weight ratio mixture) : a conductive material (super C) : styrene-butadiene rubber (SBR) : carboxymethyl cellulose (CMC) were mixed at a weight ratio of 98 : 0.1 : 1.5 : 0.4 in water to prepare a negative electrode slurry. The negative electrode slurry was applied on one surface of a copper current collector sheet, dried at 150 °C, and then roll-pressed to manufacture a negative electrode.

A separator was interposed between the positive electrode and the negative electrode manufactured as described above to stack the separator, the positive electrode, and the negative electrode in the order of separator/positive electrode/separator/negative electrode, and then wound to manufacture a jelly-roll type electrode assembly.

The electrode assembly manufactured as described above was inserted into a cylindrical battery can having a diameter of 21 mm and a height of 70 mm, and the above-described electrolyte was injected into the can to manufacture a cylindrical lithium secondary battery. After the manufactured cylindrical lithium secondary battery was activated by being charged to 4.2 V at 0.5 C, the content of fluoroethylene carbonate with respect to the total weight of the electrolyte was 1.9 wt%.

**Comparative Example 7**

1.3 M of LiPF$_6$, and 2.0 wt% of vinylene carbonate, 1.3 wt% of ethylene sulfate, and 2.0 wt% of propane sultone as additives were added to an organic solvent (ethylmethyl carbonate (EMC) : dimethyl carbonate (DMC) : fluoroethylene carbonate (FEC) = 5 : 75 : 20 weight ratio) to prepare a non-aqueous electrolyte.

Li[Ni$_{0.9}$Co$_{0.06}$Mn$_{0.03}$Al$_{0.01}$]O$_2$, carbon nanotubes, a PVDF binder were mixed at a weight ratio of 95 : 2 : 3 in N-methylpyrrolidone to prepare a positive electrode slurry. The positive electrode slurry was applied on one surface of an aluminum current collector sheet having a thickness of 15.0 $\mu$m, dried at 120 °C, and then roll-pressed to manufacture a positive electrode.

A negative electrode active material (graphite : Si = 98.2 : 1.8 weight ratio mixture) : a conductive material (super C) : styrene-butadiene rubber (SBR) : carboxymethyl cellulose (CMC) were mixed at a weight ratio of 98 : 0.1 : 1.5 : 0.4 in water to prepare a negative electrode slurry. The negative electrode slurry was applied on one surface of a copper current collector sheet, dried at 150 °C, and then roll-pressed to manufacture a negative electrode.

A separator was interposed between the positive electrode and the negative electrode manufactured as described above to stack the separator, the positive electrode, and the negative electrode in the order of separator/positive electrode/separator/negative electrode, and then wound to manufacture a jelly-roll type electrode assembly.

The electrode assembly manufactured as described above was inserted into a cylindrical battery can having a diameter of 21 mm and a height of 70 mm, and the above-described electrolyte was injected into the can to manufacture a cylindrical lithium secondary battery. After the manufactured cylindrical lithium secondary battery was activated by being charged to 4.2 V at 0.5 C, the content of fluoroethylene carbonate with respect to the total weight of the electrolyte was 16.3 wt%.

**Experimental Example**

For each of the cylindrical lithium secondary batteries manufactured in Examples 1 to 3 and Comparative Examples 1 to 7, high-temperature lifespan properties were evaluated.

Specifically, each of the cylindrical lithium secondary batteries manufactured in Examples 1 to 3 and Comparative Examples 1 to 7 was charged to 4.25 V at a rate of 0.3 C at 40 °C under a CC-CV condition, and then discharged to 2.85 V at a rate of 0.5 C under a CC condition. The above-described charge/discharge was set to 1 cycle, and the number of cycles were measured until the capacity retention rate reached 80% based on the initial capacity. The values of Z of Examples 1 to 3 and Comparative Examples 1 to 7 are shown together with the above number of cycles in Table 1 below.

[Table 1]

|  | Z | Number of cycles |
|---|---|---|
| Example 1 | 0.138 | 103 |
| Example 2 | 0.110 | 106 |
| Example 3 | 0.121 | 126 |
| Comparative Example 1 | - | 25 |
| Comparative Example 2 | 0.361 | 58 |
| Comparative Example 3 | 0.232 | 80 |
| Comparative Example 4 | 0.223 | 78 |
| Comparative Example 5 | 0.086 | 74 |
| Comparative Example 6 | 0.744 | 89 |
| Comparative Example 7 | 0.082 | 72 |

As shown in Table 1 above, the lithium secondary batteries of Examples 1 to 3 in which the values of Z satisfy the range of 0.1 to 0.2 are confirmed to have excellent lifespan properties at high temperatures compared to the lithium secondary batteries of Comparative Examples 1 to 7.

**Claims**

1. A lithium secondary battery comprising:

a negative electrode including a negative electrode current collector and a negative electrode active material layer formed on the negative electrode current collector;
a positive electrode; and
an electrolyte including a lithium salt, an organic solvent, and an additive,
wherein:

the negative electrode active material layer includes Si as a negative electrode active material;
the organic solvent contains fluoroethylene carbonate; and
Z below has a value of 0.1 to 0.2:

$$Z = \sqrt{X} / Y$$

wherein the X above is a content (wt%) of Si with respect to the total weight of the negative electrode active material included in the negative electrode active material layer, and the Y above is a content (wt%) of fluoroethylene carbonate with respect to the total weight of the electrolyte, after the lithium secondary battery is activated.

2. The lithium secondary battery of claim 1, wherein
the negative electrode active material included in the negative electrode active material layer is composed of a mixture of Si and graphite.

3. The lithium secondary battery of claim 1, wherein the X above is 1 wt% to 10 wt%.

4. The lithium secondary battery of claim 1, wherein the Y above is 12 wt% to 24 wt%.

5. The lithium secondary battery of claim 1, wherein the organic solvent further comprises ethylmethyl carbonate and dimethyl carbonate.

6. The lithium secondary battery of claim 5, wherein the dimethyl carbonate is included in an amount of 20 wt% to 70 wt% based on the total weight of the electrolyte.

7. The lithium secondary battery of claim 1, wherein the additive comprises vinylene carbonate, ethylene sulfate, and propane sultone.

8. The lithium secondary battery of claim 7, wherein the additive is included in an amount of 1 wt% to 10 wt% based on the total weight of the electrolyte.

9. The lithium secondary battery of claim 1, wherein the positive electrode comprises a positive electrode current collector and a positive electrode active material layer formed on the positive electrode current collector, wherein a positive electrode active material included in the positive electrode active material layer is a lithium nickel-based oxide represented by [Formula 1] below:

[Formula 1] $Li_aNi_bCo_cM^1_dM^2_eO_2$

wherein in Formula 1 above, $M^1$ is Mn, Al, or a combination thereof, $M^2$ is one or more selected from the group consisting of Zr, W, Y, Ba, Ca, Ti, Mg, Ta, and Nb, and $0.8 \leq a \leq 1.2$, $0.8 \leq b < 1$, $0 < c < 0.2$, $0 < d < 0.2$, and $0 \leq e \leq 0.1$.

10. The lithium secondary battery of claim 1, wherein the lithium secondary battery has a cylindrical shape.

## INTERNATIONAL SEARCH REPORT

| International application No. |
|---|
| **PCT/KR2024/016190** |

### A. CLASSIFICATION OF SUBJECT MATTER

**H01M 10/052**(2010.01)i; **H01M 4/38**(2006.01)i; **H01M 10/0569**(2010.01)i; **H01M 4/587**(2010.01)i; **H01M 4/36**(2006.01)i; **H01M 4/525**(2010.01)i; **H01M 4/505**(2010.01)i; **H01M 10/04**(2006.01)i; **H01M 10/0567**(2010.01)i

According to International Patent Classification (IPC) or to both national classification and IPC

### B. FIELDS SEARCHED

Minimum documentation searched (classification system followed by classification symbols)

H01M 10/052(2010.01); H01M 10/0525(2010.01); H01M 10/0567(2010.01); H01M 10/0569(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차전지 (lithium secondary battery), 유기 용매 (organic solvent), 플루오로 에틸렌 카보네이트 (fluoro ethylene carbonate), 활성화 (activation), 규소 (silicon)

### C. DOCUMENTS CONSIDERED TO BE RELEVANT

| Category* | Citation of document, with indication, where appropriate, of the relevant passages | Relevant to claim No. |
|---|---|---|
| A | KR 10-2020-0042319 A (SAMSUNG ELECTRONICS CO., LTD. et al.) 23 April 2020 (2020-04-23)<br>See abstract; paragraphs [0106], [0108], [0162] and [0166]-[0170]; tables 2 and 3; and claims 1 and 2. | 1-10 |
| A | KR 10-2015-0040736 A (LG CHEM, LTD.) 15 April 2015 (2015-04-15)<br>See abstract; and claims 1, 3 and 9. | 1-10 |
| A | KR 10-2022-0158682 A (A123 SYSTEMS, LLC) 01 December 2022 (2022-12-01)<br>See abstract; and claims 1-20. | 1-10 |
| A | CHEN, X. et al. Reduction mechanism of fluoroethylene carbonate for stable solid-electrolyte interphase film on silicon anode. ChemSusChem. 2014, vol. 7, pp. 549-554.<br>See abstract; and page 553. | 1-10 |
| A | MARKEVICH, E. et al. Fluoroethylene carbonate as an important component for the formation of an effective solid electrolyte interphase on anodes and cathodes for advanced Li-ion batteries. ACS Energy Letters. 2017, vol. 2, pp. 1337-1345.<br>See abstract. | 1-10 |

☐ Further documents are listed in the continuation of Box C.  ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **31 January 2025** | **31 January 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/016190**

| Patent document cited in search report | | | Publication date (day/month/year) | Patent family member(s) | | | Publication date (day/month/year) |
|---|---|---|---|---|---|---|---|
| KR | 10-2020-0042319 | A | 23 April 2020 | KR | 10-2702589 | B1 | 04 September 2024 |
| | | | | US | 11637323 | B2 | 25 April 2023 |
| | | | | US | 2020-0119403 | A1 | 16 April 2020 |
| KR | 10-2015-0040736 | A | 15 April 2015 | CN | 105637692 | A | 01 June 2016 |
| | | | | CN | 105637692 | B | 20 August 2019 |
| | | | | EP | 3041077 | A1 | 06 July 2016 |
| | | | | EP | 3041077 | B1 | 12 February 2020 |
| | | | | JP | 2016-532253 | A | 13 October 2016 |
| | | | | JP | 2018-088419 | A | 07 June 2018 |
| | | | | JP | 6579530 | B2 | 25 September 2019 |
| | | | | KR | 10-1569056 | B1 | 16 November 2015 |
| | | | | US | 10333142 | B2 | 25 June 2019 |
| | | | | US | 2016-0293944 | A1 | 06 October 2016 |
| | | | | WO | 2015-053478 | A1 | 16 April 2015 |
| KR | 10-2022-0158682 | A | 01 December 2022 | CN | 114930596 | A | 19 August 2022 |
| | | | | EP | 4082063 | A1 | 02 November 2022 |
| | | | | EP | 4082063 | A4 | 24 January 2024 |
| | | | | JP | 2023-509767 | A | 09 March 2023 |
| | | | | WO | 2021-141784 | A1 | 15 July 2021 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230142496

- KR 1020240091397